# EUROPÄISCHE PATENTSCHRIFT

(11) **EP 2 980 606 B1**
(45) Veröffentlichungstag und Bekanntmachung des Hinweises auf die Patenterteilung: **07.12.2016**
(21) Anmeldenummer: 15001628.5
(22) Anmeldetag: 01.06.2015
(51) Int. Cl.: G01S 15/93, B60R 11/04, B60K 11/04, G05D 1/02, B60Q 9/00, G01S 13/93

(54) **KRAFTFAHRZEUG**
MOTOR VEHICLE
VÉHICULE AUTOMOBILE

(30) Priorität: 29.07.2014 DE 102014011218
(43) Veröffentlichungstag der Anmeldung: 03.02.2016
(73) Patentinhaber: AUDI AG, 85045 Ingolstadt (DE)
(72) Erfinder: Kaufmann, Anton, DE - 93356 Teugn (DE); Dorfner, Wolfgang, DE - 85114 Buxheim (DE)

(56) Entgegenhaltungen:
- EP-A2- 2 289 768
- DE-A1-102008 049 207
- DE-A1-102010 026 268
- JP-A- 58 030 874

## Beschreibung

Die Erfindung betrifft ein Kraftfahrzeug mit einer im Frontbereich des Kraftfahrzeugs angeordneten Kühlerverkleidung und wenigstens einem an der Kühlerverkleidung befestigten, einer Umfelderfassungseinrichtung zugeordneten Sensor zur Erfassung eines Nahbereichs vor dem Kraftfahrzeug.

Um einem Fahrer und/oder Fahrerassistenzsystemen möglichst weitreichende Informationen über das Umfeld des Kraftfahrzeugs bereitzustellen, werden an Kraftfahrzeugen zahlreiche Sensoren vorgesehen. Insbesondere zur Unterstützung beim Manövrieren und beim Einparken sind Informationen über das unmittelbar dem Kraftfahrzeug benachbarte Kraftfahrzeugumfeld wesentlich. So kann einem Fahrer das unmittelbare Kraftfahrzeugumfeld beispielsweise durch sogenannte "Top View"-Ansichten dargestellt werden, die die Bilder von Umfeldkameras in eine Fahrebene projizieren und dem Fahrer anzeigen. Um dem Fahrer bei Manövrieren möglichst genaue Informationen über seine Position bezüglich umgebender Hindernisse zu geben, werden auch sogenannte "Cornerview"-Kameras genutzt, die das unmittelbare Kraftfahrzeugumfeld im Bereich der Ecken des Kraftfahrzeugs, also insbesondere im Bereich des vorderen linken und rechten Randes der Stoßstange des Kraftfahrzeugs, abbilden. Hierzu können mehrere einzelne Kameras genutzt werden, es kann zur Abbildung der vorderen Eckbereiche des Kraftfahrzeugs jedoch auch eine gemeinsame Kamera für beide Eckbereiche genutzt wehrden.

Bezüglich der Anordnung der Kamera ist häufig ein Kompromiss zwischen einer guten Designverträglichkeit, einem optimalen Erfassungsbereich und einem Schutz der Kamera und somit einem gewissen Mindestabstand von der Straßenfläche erforderlich. Ein geeigneter Anbringungsort ist eine Kühlerschutzverkleidung des Kraftfahrzeugs. Nachteilig ist hierbei jedoch, dass bei diesem Anbringungsort designbedingt nicht der komplette Nahbereich vor dem Kraftfahrzeug abgebildet werden kann. Durch den Verlauf des Kühlerschutzgitters sowie durch das Kennzeichenfeld kann ein Bereich direkt vor dem Fahrzeug nicht durch Kameras oder andere Sensoren erfasst werden, die am Kühlerschutzgitter angeordnet sind.

DE102010026268 A1 beschreibt eine Vorrichtung gemäß den Oberbegriff des Anspruchs 1, wobei das Kraftfahrzeug mit einer im Frontbereich des Kraftfahrzeugs angeordneten Kühlerverkleidung und wenigstens einem an der Kühlerverkleidung befestigten, einer Umfelderfassungseinrichtung zugeordneten Sensor zur Erfassung eines Nahbereichs vor dem Kraftfahrzeugs.

Der Erfindung liegt somit die Aufgabe zugrunde, ein Kraftfahrzeug anzugeben, bei dem ein Sichtbereich von Sensoren zur Erfassung eines Nahbereichs vor dem Kraftfahrzeug verbessert ist.

Die Aufgabe wird erfindungsgemäß durch ein Kraftfahrzeug der eingangs genannten Art gelöst, wobei das Kraftfahrzeug wenigstens einen Aktor umfasst, durch den die Kühlerverkleidung zur Veränderung des Erfassungsbereichs des Sensors ganz oder teilweise um eine im wesentlichen in Fahrzeugquerrichtung verlaufende Schwenkachse zwischen wenigstens zwei Schwenkstellungen verschwenkbar ist.

Der Sensor kann insbesondere zur Abbildung des bodennahen Kraftfahrzeugumfelds im vorderen Bereich des Kraftfahrzeugs dienen. Der Aktor kann insbesondere durch die Umfelderfassungseinrichtung angesteuert werden, wenn ein Fahrzeugzustand erkannt wird, bei dem eine Erweiterung des Erfassungsbereichs in Richtung der Fahrzeugfront wünschenswert oder erforderlich ist. Die Ansteuerung kann bevorzugt bei einer Unterschreitung einer Mindestgeschwindigkeit, bei einem Erkennen eines Einparkvorgangs oder aufgrund einer Bedieneingabe erfolgen.

Bei einem Verschwenken der Kühlerverkleidung aus einer während des Fahrbetriebs angenommenen Normallage wird vorzugsweise eine Oberkante der Kühlerverkleidung bezüglich des Kraftfahrzeugs vorwärts bewegt. Hierdurch wird ein Erfassungsbereich des Sensors in Richtung der Fahrzeugfront verlagert.

Der Aktor kann insbesondere ein linear wirkender Aktor sein, der, beispielsweise über eine Kulissenführung, einen oberen Bereich der Kühlerverkleidung in eine Vorwärtsrichtung bezüglich des Kraftfahrzeugs verschiebt oder einen unteren Bereich der Kühlerverkleidung in Richtung des Hecks des Kraftfahrzeugs zieht. Alternativ kann auch ein rotatorisch wirkender Aktor vorgesehen sein, der die Kühlerverkleidung ganz oder teilweise bezüglich der Schwenkachse rotiert. Die Kühlerverkleidung beziehungsweise der verschwenkbare Teil der Kühlerverkleidung kann gegen eine Elastizität gelagert sein, so dass bei einem Aufbringen eine Kraft durch den Aktor die Kühlerverkleidung in eine Richtung verschwenkt wird und ein Rückstellen der Verschwenkung durch die Elastizität erfolgt. Für einen Fachmann ergeben sich eine Vielzahl weiterer Ausbildungsmöglichkeiten für den Aktor und die Kühlerverkleidung, durch die das erfindungsgemäße Verschwenken erreicht werden kann.

Die Kühlerverkleidung kann eine Verkleidung eines Motorkühlers sein. Sie kann einstückig ausgebildet sein, in welchem Fall die gesamte Kühlerverkleidung verschwenkt wird. Es ist jedoch auch möglich, die Kühlerverkleidung mehrteilig auszubilden, womit nur eines oder mehrere Segmente der Kühlerverkleidung durch den Aktor verschwenkbar sein können. Es ist auch möglich, dass verschiedene Segmente durch separat Aktoren unterschiedlich verschwenkt werden. Die Schwenkachse, um die die Kühlerverkleidung ganz oder teilweise verschwenkt wird, kann, insbesondere aus Designgründen oder aufgrund von Fertigungstoleranzen, so angeordnet sein, dass zwischen der Fahrzeugquerrichtung und der Schwenkachse ein kleiner Winkel von weniger als 10°, insbesondere von weniger als 5° eingeschlossen ist.

Der Sensor kann eine Kamera, insbesondere eine Weitwinkelkamera sein. Durch das Anordnen einer Weitwinkelkamera in einem bezüglich der Fahrzeugquerrichtung zentral gelegenen Bereich der Kühlerverkleidung können beide vorderen Eckbereiche des Kraftfahrzeugs abgebildet werden, womit eine optimale Erfassung des Kraftfahrzeugümfelds bereits mit einer kleinen Sensoranzahl möglich ist. Alternativ könnte beispielsweise jeweils eine Kamera links und eine Kamera rechts randseitig an der Kühlerverkleidung angeordnet sein.

Vorteilhaft ist der Sensor starr an der Kühlerverkleidung befestigt. Da der Nahbereich vor dem Kraftfahrzeug abgebildet werden soll, kann der Sensor derart an der Kühlerverkleidung befestigt sein, dass in allen Schwenkstellungen der Kühlerverkleidung ein Erfassungswinkel des Sensors gegenüber der Fahrzeuglängsachse in Richtung einer Fahrbahn geneigt ist.

Die Schwenkachse kann in der unteren Hälfte, insbesondere im unteren Drittel der Kühlerverkleidung verlaufen. In diesem Fall kann bereits, mit relativ kleinen Schwenkwinkeln der Kühlerverkleidung eine große Verschiebung des insbesondere starr an der Kühlerverkleidung angeordneten Sensor erreicht werden. Vorteilhaft kann der Sensor in der oberen Hälfte, insbesondere im oberen Drittel, der Kühlerverkleidung angeordnet sein.

Die Umfelderfassungseinrichtung kann zur Ansteuerung einer Anzeigeeinrichtung des Kraftfahrzeugs derart ausgebildet sein, dass ein separater linker und ein separater rechter Darstellungsbereich dargestellt werden, wobei der linke Darstellungsbereich erste Sensordaten des Sensors oder eines der Sensoren, die das linke vordere Fahrzeugumfeld betreffen, und der rechte Darstellungsbereich zweite Sensordaten des Sensors oder eines der Sensoren, die das rechte vordere Fahrzeugumfeld betreffen, darstellt. Insbesondere ist der erläuterte Darstellungsmodus der Umfelderfassungseinrichtung benutzerseitig wählbar oder wird in vorgegebenen Fahrzeugsituationen automatisch gewählt. Die Umfelderfassungseinrichtung kann dazu ausgebildet sein, den Aktor im beschriebenen Darstellungsmodus zur Verschwenkung der Kühlerverkleidung anzusteuern, um einen Erfassungsbereich des Sensors in Richtung der Fahrzeugfront zu verlagern.

Das Kraftfahrzeug kann ein Fußgängerschutzsystem umfassen, das bei Erfassung einer drohenden Kollision eines Fußgängers mit dem Frontbereich des Kraftfahrzeugs zur Ansteuerung des Aktors zum Verschwenken der Kühlerverkleidung in ein eine vorgegebene Schwenkstellung ausgebildet ist. Durch ein Ausschwenken der Kühlerverkleidung, insbesondere im oberen Bereich der Kühlerverkleidung, wird es ermöglicht, dass ein zusätzliches Element bei einer Kollision mit einem Fußgänger kontrolliert nachgibt, wodurch insbesondere der Hüftbereich eines Fußgängers schützbar ist. Die vorgegebene Schwenkstellung kann mechanisch oder durch das Fußgängerschutzsystem fest vorgegeben sein, alternativ ist es möglich, dass die vorgegebene Schwenkstellung in Abhängigkeit von Parametern des Fußgängerschutzsystems vorgegeben wird.

Weitere Vorteile und Einzelheiten zeigt das folgende Ausführungsbeispiel sowie die zugehörigen Zeichnungen. Dabei zeigen schematisch:
- Fig. 1: ein Ausführungsbeispiel eines erfindungsgemäßen Kraftfahrzeugs,
- Fig. 2: eine Detailansicht des in Fig. 1 gezeigten Kraftfahrzeugs, wobei die Kühlerverkleidung in eine erste Schwenkstellung verschwenkt ist, und
- Fig. 3: die in Fig. 2 gezeigte Teilansicht, wobei die Kühlerverkleidung in eine zweite Schwenkstellung verschwenkt ist.

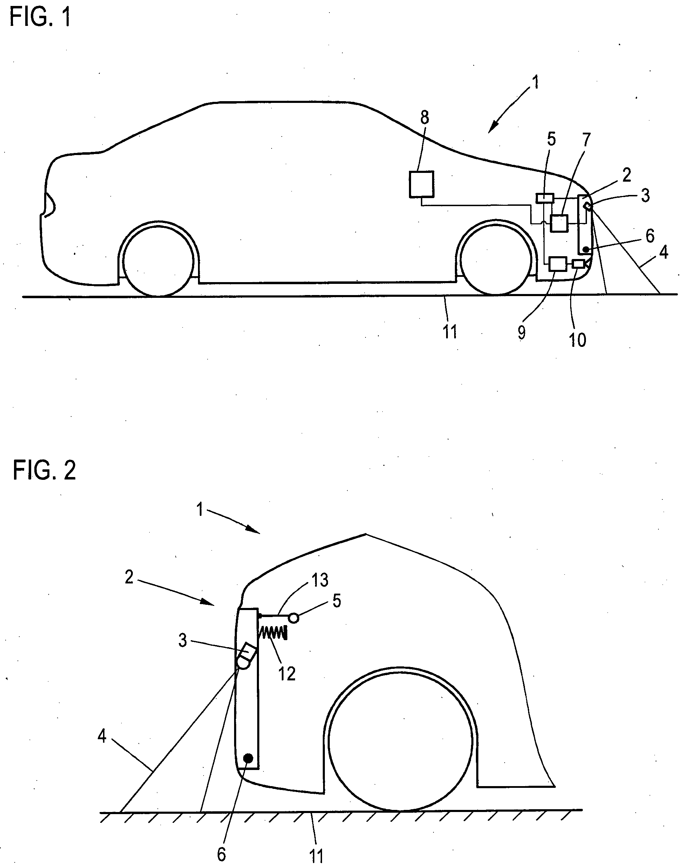

Fig. 1 zeigt ein Kraftfahrzeug 1 mit einer im Frontbereich des Kraftfahrzeugs angeordneten Kühlerverkleidung 2 und einem an der Kühlerverkleidung 2 angeordneten Sensor 3, nämlich einer Weitwinkelkamera.

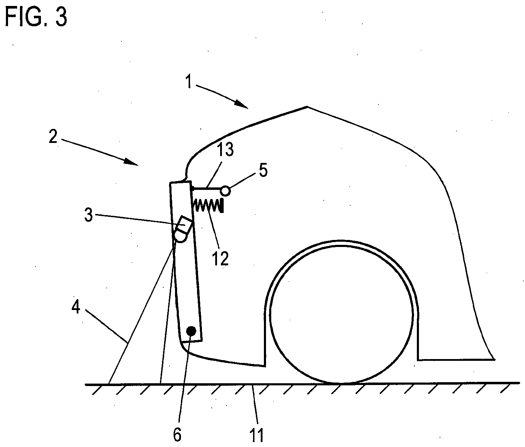

Der Erfassungsbereich 4 des Sensors 3 umfasst einen Bereich der Straße 11 vor dem Kraftfahrzeug 1. Aufgrund der konkreten Ausbildung des Kraftfahrzeugs 1 liegt der unmittelbar vor dem Kraftfahrzeug 1 liegende Bereich der Straße 11 jedoch nicht im Erfassungsbereich 4 des Sensors 3. Um den Erfassungsbereich 4 bezüglich des Kraftfahrzeugs 1 verlagern zu können, ist im Kraftfahrzeug 1 der Aktor 5 vorgesehen, durch den die Kühlerverkleidung 2 um die in Fahrzeugquerrichtung verlaufende Achse 6 schwenkbar ist. Die Verschwenkung der Kühlerverkleidung 2 um die Achse 6 wird im Folgenden im Detail mit Bezug auf Fig. 2 und 3 beschrieben.

Fig. 2 zeigt die Kühlerverkleidung 2 in einer während des Fahrbetriebs eingenommenen Normallage, wie sie bereits in Fig. 1 dargestellt ist. Der Aktor 5 ist ein rotatorischer Aktor, der einen flexiblen Strang 13, der fest mit der Kühlerverkleidung 2 verbunden ist, in Abhängigkeit einer später noch genauer erläuterten Ansteuerung durch die Umfelderfassungseinrichtung 7 und das Fußgängerschutzsystems 9 auf- beziehungsweise abwickelt. Die Kühlerverkleidung 2 ist durch die Achse 6 gelagert und wird durch den Strang 13 gegen die Elastizität 12 gedrückt. Zur klaren Darstellung ist die Elastizität 12 in Fig. 2 und 3 als ein separates Federelement dargestellt. Vorteilhaft kann die Elastizität 12 jedoch auch durch einen verformbaren Bereich der Kühlerverkleidung 2 gebildet sein.

Wird der Aktor 5 durch das Fußgängerschutzsystem 9 beziehungsweise die Umfelderfassungseinrichtung 7 derart angesteuert, dass der Strang 13 abgerollt wird, so drückt die Elastizität 12, wie in Fig. 2 gezeigt, im oberen Bereich der Kühlerverkleidung 2 gegen die Kühlerverkleidung 2, womit diese um die Achse 6 verschwenkt wird. Aufgrund der Schwenkung der Kühlerverkleidung 2 wird der Erfassungsbereich 4 des Sensors 3 in Richtung der Fahrzeugfront verlagert und der Sichtwinkel des Sensors 3 bezüglich der Fahrbahn wird steiler. Somit können aufgrund der Verschwenkung der Kühlerverkleidung 2 Bereiche der Fahrbahn 11 erfasst werden, die sehr nahe am Kraftfahrzeug 1 liegen.

Das Kraftfahrzeug 1 umfasst die Umfelderfassungseinrichtung 7, die zur Ansteuerung der Anzeigeeinrichtung 8 derart ausgebildet ist, das ein separater linker und ein separater rechter Darstellungsbereich dargestellt werden, wobei der linke Darstellungsbereich erste Sensordaten des Sensors 3, die das linke vordere Fahrzeugumfeld betreffen, und der rechte Darstellungsbereich zweite Sensordaten des Sensors 3, die das rechte vordere Fahrzeugumfeld betreffen, darstellt. In diesem "Cornerview"-Modus werden somit die vorderen Ecken des Kraftfahrzeugs 1 abgebildet, wodurch das Manövrieren des Kraftfahrzeugs 1 erleichtert wird. Ein entsprechender Modus der Umfelderfassungseinrichtung 7 kann insbesondere für Parkvorgänge des Kraftfahrzeugs 1 aktiviert werden. Dies ist durch ein nicht gezeigtes Bedienelement des Kraftfahrzeugs 1 möglich. Der Betriebsmodus der Umfelderfassungseinrichtung 7 wird zudem dann aktiviert, wenn durch ein Fahrerassistenzsystem der Beginn eines Manövriervorgangs ermittelt wurde. Sobald der beschriebene Modus der Umfelderfassungseinrichtung aktiviert wird, steuert die Umfelderfassungseinrichtung 7 den Aktor 5 an, um die Kühlerverkleidung 2 zu verkippen, um den Erfassungsbereich des Sensors 3 in Richtung der Fahrzeugfront zu verlagern.

Des weiteren ist im Kraftfahrzeug 1 das Fußgängerschutzsystem 9 vorgesehen. Wird durch Auswertung der Sensordaten des weiteren Sensors 10 durch das Fußgängerschutzsystems 9 eine drohende Kollision mit einem Fußgänger ermittelt, so wird in Abhängigkeit der Erfassungsdaten des weiteren Sensors 10 sowie weitere Kraftfahrzeugparameter ein Schwenkwinkel für die Kühlerverkleidung vorgegeben, um einen optimalen Fußgängerschutz im Hüftbereich zu erreichen, und der Aktor 5 wird angesteuert, um die Kühlerverkleidung 2 zu diesem Schwenkwinkel zu schwenken.

## Patentansprüche

1. Kraftfahrzeug mit einer im Frontbereich des Kraftfahrzeugs (1) angeordneten Kühlerverkleidung (2) und wenigstens einem an der Kühlerverkleidung (2) befestigten, einer Umfelderfassungseinrichtung (7) zugeordneten Sensor (3) zur Erfassung eines Nahbereichs vor dem Kraftfahrzeug (1),
**dadurch gekennzeichnet,**
**dass** das Kraftfahrzeug (1) wenigstens einen Aktor (5) umfasst, durch den die Kühlerverkleidung (2) zur Veränderung des Erfassungsbereichs (4) des Sensors (3) ganz oder teilweise um eine im wesentlichen in Fahrzeugquerrichtung verlaufende Schwenkachse (6) zwischen wenigstens zwei Schwenkstellungen verschwenkbar ist.

2. Kraftfahrzeug nach Anspruch 1,
**dadurch gekennzeichnet,**
**dass** der Sensor (3) eine Kamera, insbesondere eine Weitwinkelkamera, ist.

3. Kraftfahrzeug Anspruch 1 oder 2,
**dadurch gekennzeichnet,**
**dass** der Sensor (3) starr an der Kühlerverkleidung (2) befestigt ist.

4. Kraftfahrzeug nach einem der vorangehenden Ansprüche,
**dadurch gekennzeichnet,**
**dass** die Schwenkachse (6) in der unteren Hälfte, insbesondere im unteren Drittel, der Kühlerverkleidung (2) verläuft.

5. Kraftfahrzeug nach einem der vorangehenden Ansprüche,
**dadurch gekennzeichnet,**
**dass** die Umfelderfassungseinrichtung (7) zur Ansteuerung einer Anzeigeeinrichtung (8) des Kraftfahrzeugs derart ausgebildet ist, dass ein separater linker und ein separater rechter Darstellungsbereich dargestellt werden, wobei der linke Darstellungsbereich erste Sensordaten des Sensors (3) oder eines der Sensoren (3), die das das linke vordere Fahrzeugumfeld betreffen, und der rechte Darstellungsbereich zweite Sensordaten des Sensors (3) oder eines der Sensoren (3), die das rechte vordere Fahrzeugumfeld betreffen, darstellt.

6. Kraftfahrzeug nach einem der vorangehenden Ansprüche,
**dadurch gekennzeichnet,**
**dass** das Kraftfahrzeug ein Fußgängerschutzsystem (9) umfasst, dass bei Erfassung einer drohenden Kollision eines Fußgängers mit dem Frontbereich des Kraftfahrzeugs (1) zur Ansteuerung des Aktors (5) zum Verschwenken der Kühlerverkleidung (2) in eine vorgegebene Schwenkstellung ausgebildet ist.

## Claims

1. Motor vehicle having a radiator cover (2) arranged in the front area of the motor vehicle (1) and at least one sensor (3) fixed to the radiator cover (2) and associated to an environmental monitoring device (7) for monitoring a close range in front of the motor vehicle (1),
**characterised in that**
the motor vehicle (1) comprises at least one actuator (5) by which the radiator cover (2), for variation of the monitoring area (4) of the sensor (3), can be wholly or partly pivoted around a pivot axis (6) substantially running in a transverse direction of the vehicle between at least two pivot positions.

2. Motor vehicle according to Claim 1,
**characterised in that**
the sensor (3) is a camera, in particular a wide-angle camera.

3. Method according to Claim 1 or 2,
**characterised in that**
the sensor (3) is rigidly attached to the radiator cover (2).

4. Motor vehicle according to any one of the preceding claims,
**characterised in that**
the pivot axis (6) runs in the lower half, in particular in the lower third, of the radiator cover (2).

5. Motor vehicle according to any one of the preceding claims,
**characterised in that**
the environmental monitoring device (7) is designed to control a display device (8) of the motor vehicle in such a manner that a separate left and a separate right display area are displayed, wherein the left display area displays first sensor data from the sensor (3) or one of the sensors (3), which relate to the left front vehicle environment, and the right display area displays second sensor data from the sensor (3) or one of the sensors (3), which relate to the right front vehicle environment.

6. Motor vehicle according to any one of the preceding claims,
**characterised in that**
the motor vehicle comprises a pedestrian protection system (9) which, upon detection of an impending collision of a pedestrian with the front area of the motor vehicle (1), is designed to control the actuator (5) to pivot the radiator cover (2) into a predetermined pivot position.

## Revendications

1. Véhicule automobile comprenant une calandre de radiateur (2) agencée dans la zone frontale du véhicule automobile (1) et au moins un capteur (3) fixé au niveau de la calandre de radiateur (2), associé à un dispositif détecteur d'environnement (7), servant à la détection d'une zone proche devant le véhicule automobile (1),
**caractérisé en ce**
**que** le véhicule automobile (1) comprend au moins un actionneur (5), par lequel la calandre de radiateur (2) peut être pivotée en totalité ou en partie autour d'un axe de pivotement (6) s'étendant sensiblement dans la direction transversale du véhicule, entre au moins deux positions de pivotement pour modifier la zone de détection (4) du capteur (3).

2. Véhicule automobile selon la revendication 1,
**caractérisé en ce**
**que** le capteur (3) est une caméra, en particulier une caméra à grand angle.

3. Véhicule automobile selon la revendication 1 ou 2,
**caractérisé en ce**
**que** le capteur (3) est fixé de manière rigide à la calandre de radiateur (2).

4. Véhicule automobile selon l'une quelconque des revendications précédentes,
**caractérisé en ce**
**que** l'axe de pivotement (6) s'étend dans la moitié inférieure, en particulier dans le tiers inférieur, de la calandre de véhicule (2).

5. Véhicule automobile selon l'une quelconque des revendications précédentes,
**caractérisé en ce**
**que** le dispositif détecteur d'environnement (7) est réalisé pour la commande d'un dispositif d'affichage (8) du véhicule automobile de telle manière qu'une zone de visualisation gauche séparée et une zone de visualisation droite séparée sont représentées, la zone de visualisation gauche représentant des premières données de capteur du capteur (3) ou de l'un des capteurs (3), qui concernent l'environnement avant gauche du véhicule, et la zone de visualisation droite représentant des deuxièmes données de capteur du capteur (3) ou de l'un des capteurs (3), qui concernent l'environnement avant droit du véhicule.

6. Véhicule automobile selon l'une quelconque des revendications précédentes,
**caractérisé en ce que** le véhicule automobile comprend un système de protection de piétons (9), qui est réalisé pour, lors de la détection d'un risque de collision entre un piéton et la zone frontale du véhicule automobile (1), commander l'actionneur (5) pour faire pivoter la calandre de radiateur (2) dans une position de pivotement prédéterminée.
